# EUROPEAN PATENT APPLICATION

(11) **EP 2 546 560 A1**
(43) Date of publication of application: **16.01.2013**
(21) Application number: 12175577.1
(22) Date of filing: 09.07.2012
(51) Int. Cl.: F16L 1/036

(54) **Method for laying a pipeline and recovery tank for use therein**

(30) Priority: 09.07.2011 NL 2007075
(71) Applicant: Bols, Rene Christiaan, 49824 Laar (DE)
(72) Inventor: Bols, Rene Christiaan, 49824 Laar (DE)
(74) Representative: Bartelds, Erik

(57) **Abstract**

The invention relates to a method for laying a pipeline. This method comprises the steps of:
- determining a route for the pipeline,
- supplying a number of pipes by road using a truck to a transfer location in the vicinity of the route,
- transferring the pipes from the truck to a recovery tank by making use of the recovery tank,
- transporting the pipes overland to the route using the recovery tank,
- setting down the pipes at the route using the recovery tank, and
- mutually connecting the pipes.

The invention further relates to a recovery tank intended for use in such a method.

## Description

The invention relates to a method for laying a pipeline, comprising the steps of:
a) determining a route for the pipeline,
b) supplying a number of pipes by road using a truck to a transfer location in the vicinity of the route,
c) transferring the pipes from the truck to a caterpillar vehicle,
d) transporting the pipes overland to the route using the caterpillar vehicle,
e) setting down the pipes at the route, and
f) mutually connecting the pipes.

Such a method is generally known and is applied in the laying of pipelines, for instance for transport of gases or liquids over great distances.

It has heretofore been the case that pipes which must form part of a pipeline to be laid are taken by road by means of a truck to a location in the vicinity of the location where the pipeline will run. This is because pipelines will generally follow the shortest possible path between two points, and preferably at some distance from built-up areas and the like in order to prevent nuisance as far as possible. Because trucks cannot deliver their load off-road, the pipes are removed from the truck at the transfer location and there placed on another vehicle which is suitable for travel on the terrain. Use is usually made for this purpose of a mobile crane, caterpillar crane, telescopic crane or crawler crane, which takes the pipes from the truck and places them on a special pipe transporter. This transporter is a converted bulldozer with a number of frameworks on either side for the purpose of carrying the pipes. The mobile crane can be formed by an excavator having a special tool for picking up the pipes at the end of its excavator arm. Once the transporter has been loaded, it travels through the terrain to the location alongside the trench where the pipes will be used. The transporter is there unloaded by a second mobile crane.

The pipes have in practice a length between 15 and 20 metres at a diameter of 1 metre 20 (48 inches). The weight of such pipes can amount to almost 15 tons. This entails that a truck can supply only two or three such pipes, while the special pipe transporter will be able, depending on the ground conditions, to transport four to six pipes, so two truckloads. Using the known method it is possible to lay about 500 metres of pipeline in a 10-hour working day.

The known method has a number of drawbacks. Firstly, it requires considerable investment since, in addition to the special pipe transporter, two mobile cranes are necessary, one for unloading the trucks at the transfer location and one for unloading the pipe transporter at the trench. The use of a pipe transporter based on a bulldozer undercarriage moreover has the drawback that the terrain is heavily loaded as a result. This is the result of the rigid construction and the short length of the running gear of a bulldozer. This pipe transporter can moreover not travel on the road because the steel running gear would damage the road surface. This means that, when a pipeline intersects a road, the pipe transporter has to be "ferried" across at this location using a low loader. This is laborious and time-consuming.

The invention now has for its object to provide a method of the above described type wherein these drawbacks do not occur, or at least do so to lesser extent. According to the invention this is achieved in such a method in that the steps c), d) and e) are performed by a recovery tank.

By making use of a recovery tank, which can take the pipes from the truck, transport them overland and set them down again on site, it is possible to suffice with considerably less equipment than in the conventional method. This is because the recovery tank fulfills the function of both pipe transporter and mobile crane. As a result of the independent suspension of the running gear and the longer caterpillar track a recovery tank moreover causes less damage to the terrain than the pipe transporter based on a bulldozer. A tank is also considerably faster and more manoeuvrable. Because the running gear of a tank moreover comprises rubber blocks, a recovery tank does not damage the road surface, or hardly so. This makes it possible to travel over the road with the tank from the one location to the other, and a recovery tank can in any case cross a road which the pipeline may intersect. Finally, a recovery tank has a sufficient own weight to remain stable when a considerable distance has to be spanned during loading or unloading of the pipes.

In step c) the recovery tank preferably lifts the pipes off the truck and places them on a transport framework. The truck can thus be unloaded quickly.

The pipes are preferably placed here in step c) on a transport framework arranged on the recovery tank. The recovery tank itself then functions as pipe transporter.

Alternatively or additionally, it is also possible to envisage the pipes being placed on a transport framework arranged on a trailer pulled by the recovery tank. In this case the recovery tank thus (also) functions as tractive vehicle for a non-self-propelling pipe transporter. The recovery tank itself can in this case also be loaded, whereby more pipes can be transported in one run.

For the steps c) and e) use is preferably made of a telescopic crane arranged on the recovery tank. Such a telescopic crane has a relatively wide reach, certainly compared to the arm of an excavator, whereby pipes can be picked up from further away and can also be set down over a greater distance without displacements of the recovery tank itself being necessary for this purpose.

The invention further relates to a recovery tank which can be used in a method as described above.

In a preferred embodiment this recovery tank is provided with at least one transport framework for pipes.

The transport framework is preferably adapted to carry the pipes in the direction of travel. The pipes, which are relatively long, can hereby be properly supported and transported in stable manner.

For the purpose of increasing the transport capacity and improving stability, the recovery tank is preferably provided with two transport frameworks arranged on either side of the tank. These frameworks can be movable between a retracted transport position and an extended position of use. This movement can be driven hydraulically.

The recovery tank is more preferably provided with a telescopic crane.

In a preferred embodiment of the recovery tank the crane is mounted rotatably thereon. Pipes can thus be picked up and set down at different positions relative to the recovery tank.

The telescopic crane preferably has a capacity of at least 40 tons-metre, more preferably at least 70 tons-metre and most preferably at least 100 tons-metre. Relatively large and heavy pipes can thus be displaced over a relatively wide range.

In order to increase the stability of the recovery tank during use of the telescopic crane, it is preferably provided with stabilizer jacks. These stabilizer jacks can be movable, for instance hydraulically, between a retracted transport position and an extended position of use.

The recovery tank is preferably further provided with means for pulling a trailer. As stated, this can increase the transport capacity.

Making use of a recovery tank can double productivity relative to the conventional method, while the investment is lower. It is possible using a recovery tank to lay more than a kilometre of pipeline per working day.

The invention is now elucidated on the basis of an embodiment, wherein reference is made to the accompanying drawing, in which:
Figure 1 is a schematic view of the laying of a pipeline, in which the route of the pipeline and a transfer location are shown, as well as a truck and a recovery tank,
Figure 2 is a schematic perspective view of the recovery tank during handling of a pipe,

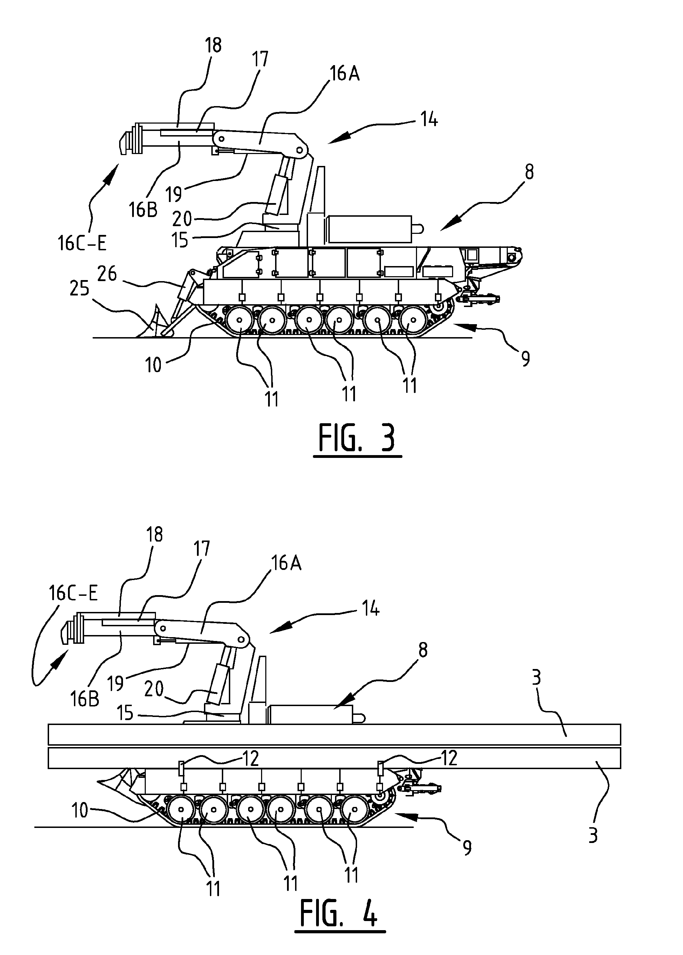

Figure 3 is a side view of the recovery tank with the telescopic crane in retracted position,
Figure 4 is a view corresponding to figure 3 of the recovery tank with a transport frameworks and pipes,

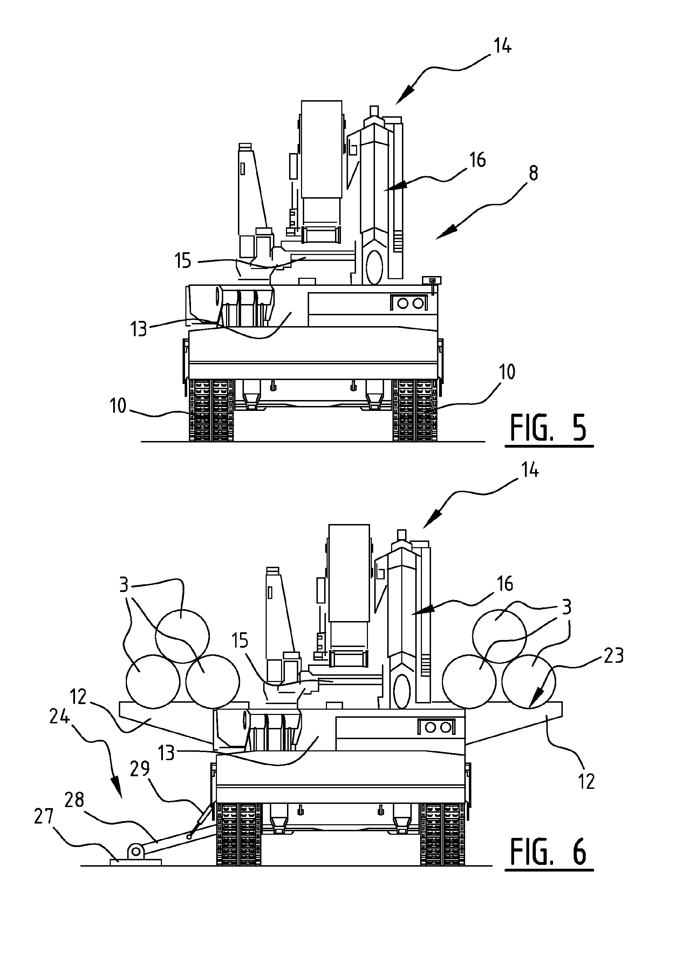

Figure 5 is a front view of the recovery tank of figure 1, showing one of the side stabilizer jacks in extended position, and
Figure 6 is a view corresponding to figure 5 of the recovery tank with transport frameworks and pipes.

In order to lay a pipeline 1 a route 2 for the pipeline is first determined, after which pipes 3 are supplied which are connected to each other adjacently of route 2 to form a pipeline. Then excavated at the position of the marked route 2 is a trench in which pipeline 1 is placed. Pipes 3 are produced in a factory and supplied by road 5 on a truck 4. Because pipelines are generally laid some distance from other infrastructure and trucks are usually unsuitable for off-road travel, pipes 3 have to be transported from road 5 to route 2 by an all-terrain vehicle specially suited for the purpose. Truck 4 is for this purpose unloaded at a transfer location 6, and pipes 3 are transferred here to the all-terrain vehicle.

According to the invention use is made of a recovery tank 8 as all-terrain vehicle for transporting pipes 3 over terrain 7 between transfer location 6 and route 2. This recovery tank is provided with a running gear 9 with two caterpillars 10 running over wheels 11. These wheels 11 are independently suspended and caterpillars 10 are relatively long so that the surface pressure is relatively low, and so the terrain is not damaged too badly when recovery tank 8 passes.

Recovery tank 8 is further provided on either side of its chassis 13 with transport frameworks 12 on which pipes 3 can be transported. These transport frameworks 12 can be folded in and out hydraulically so that the width of recovery tank 8 remains limited when it is not transporting pipes. Transport frameworks 12 are provided with recesses 23, the dimensions of which are adjusted to the diameter of pipes 3 to be transported. For use in uneven terrain extra recesses can optionally also be provided with which pipes 3 can be clamped in order to prevent them sliding or rolling off.

Recovery tank 8 is further provided with a telescopic crane 14, the base 15 of which is mounted for rotation about a vertical axis V in chassis 13. Arm 16 of crane 14 is mounted in base 15 for pivoting about a horizontal axis H. Arm 16 has a first segment 16A and a second segment 16B pivotally connected thereto. Segment 16B forms the basis of the telescopic part, which comprises three extendable segments 16C-E which can be extended and retracted relative to each other by means of hydraulic jacks 17, 18. The pivoting movement of second segment 16B relative to first segment 16A takes place by means of a hydraulic jack 19, while the pivoting movement of arm 16 relative to base 15 is effected by a hydraulic jack 20.

The capacity of telescopic crane 14 and the size, the performance and the weight of recovery tank 8 are adapted to the anticipated loads. Pipes 3 will in practice have a weight of a maximum of 15 tons. In order to enable pick-up or set-down of such pipes over a distance of for instance 7 or 8 metres a crane 14 is required with a capacity of at least 100 tons-metre. For lighter operations, for instance handling pipes with smaller diameters and/or lengths, it would be possible to suffice with a recovery tank 8 with a smaller crane 14, for instance a crane of 40 or 50 tons-metre.

The own weight of recovery tank 8 and the track width of its running gear 9 must be large enough to also be able to handle pipes 3 adjacently of recovery tank 8. Considering the length of pipes 3, they are after all placed in longitudinal direction of recovery tank 8, i.e. in the direction of travel, on transport frameworks 12 on the sides. In order to prevent recovery tank 8 tilting under this load an own weight is required in the order of 60 tons - including crane 14 - at a track width of 2.5 to 3 metres.

The dimensions and capacity of telescopic crane 14 are here also such that pipes 3 can be rotated in the air. This means that crane 14 must be able to bear the weight of a pipe 3 when arm 16 is extended telescopically over at least half the length of pipe 3.

In order to keep recovery tank 8 stable during operation with extended crane arm 16 it is provided with stabilizer jacks 24 on the sides and a stabilizer jack 25 on the front. The recovery tank can thus be stabilized over three-quarters of its periphery. Front stabilizer jack 25 is formed here by a dozer blade which often already forms part of the standard equipment of recovery tank 8. This dozer blade 25 can be folded out by means of hydraulic jacks 26 until it lies flat on the ground and thus forms a stabilizer jack. Each side stabilizer jack 24 comprises a plank 27 extending roughly along the length of running gear 9. This plank 27 is attached with pivot arms 28 to the side of recovery tank 8 and can be folded in and out by hydraulic jacks 29.

Recovery tank 8 is finally also provided with means 21 for attaching a trailer 22 thereto, for instance a caterpillar vehicle or other terrain vehicle without its own drive. These attaching means are for instance adapted to receive one end of a pull rod or pulling frame, the other end of which can be attached to trailer 22. Such attaching means 21 can be provided on both the rear side and front side of recovery tank 8.

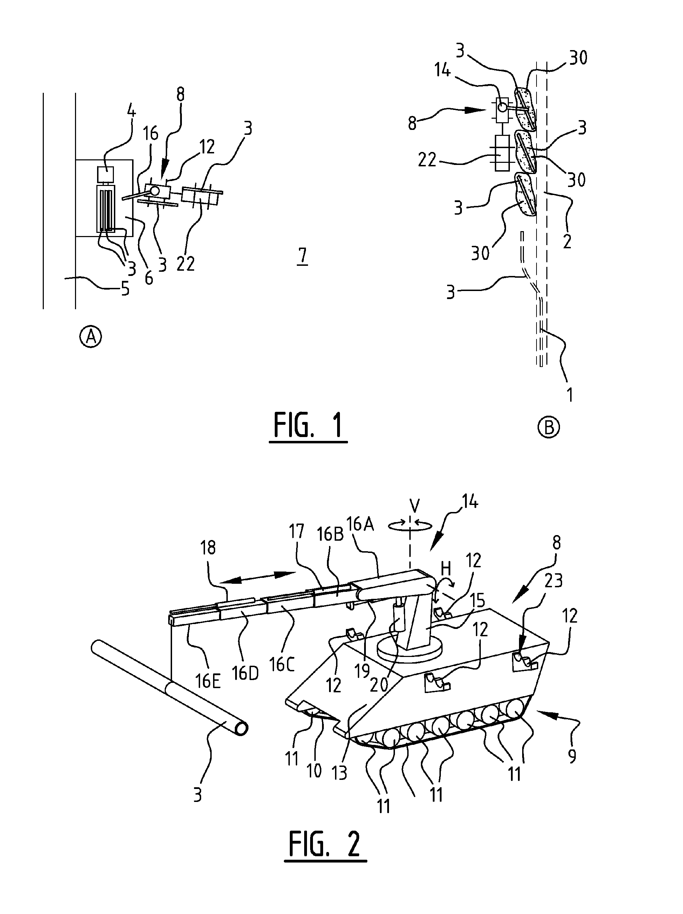

Figure 1A shows how recovery tank 8 unloads a truck 4 loaded with pipes 3 and sets down these pipes 3 on transport frameworks 12 along its own sides. In addition, some of the pipes 3 are loaded onto a trailer 22 which in the shown embodiment is coupled behind recovery tank 8. For the purpose of unloading truck 4 and loading recovery tank 8 and trailer 22 use is made of the extendability of crane 14 and the rotatability thereof about the different axes V, H.

Once recovery tank 8 and optionally trailer 22 have been fully loaded, recovery tank 8 travels through terrain 7 to route 2. A service road or sand track can otherwise be constructed toward or along the route in order to improve accessibility. Using crane 14, pipes 3 are there once again unloaded from recovery tank 8 and laid alongside route 2, as shown in figure 1B. When a trailer 22 is brought along, pipes 3 are also unloaded therefrom and placed alongside route 2. Pipes 3 are here placed 'mitred' to some extent on sand heaps 30. Because recovery tank 8 is highly manoeuvrable and crane 14 moreover enables very many movements, pipes 3 can be laid accurately alongside the route so that they can then be connected to each other in simple manner.

As soon as all pipes 3 have been unloaded, recovery tank 8 returns to transfer location 6 to pick up a new load of pipes.

The thus supplied pipes 3 are then aligned and connected to each other to form a pipe string. Subsequently or simultaneously, a trench is dug along the marked route 2 in which the pipe string is finally placed.

Making use of a recovery tank which forms both a mobile crane and a transport vehicle it is thus possible to achieve a high productivity in the supply of pipes for laying a pipeline. Owing to its versatility the recovery tank can also be used for other operations. The relatively large and strong crane thus makes the tank suitable for all manner of hoisting operations, both stationary and mobile. Recovery tank 8 can thus also be used to transport and place concrete anchoring elements for the pipeline in the trench. Recovery tank 8 can also be utilized in pulling or hoisting the pipeline into a parabolic shape before it is placed in the trench (fig. 1B), and in the final lowering of the pipeline into the trench. These are operations in which a number of cranes are involved. Finally, the recovery tank is usually also equipped with a winch, whereby heavy winching operations as well as salvage operations are of course possible. By adding suitably chosen implements thereto the tank can further also be used to carry out earthworks, for instance cutting or deep-ploughing.

Although the invention is elucidated above on the basis of an embodiment, it will be apparent that it is not limited thereto but can be varied in numerous ways. The scope of the invention is therefore defined solely by the following claims.

## Claims

1. Method for laying a pipeline, comprising the steps of:
a) determining a route for the pipeline,
b) supplying a number of pipes by road using a truck to a transfer location in the vicinity of the route,
c) transferring the pipes from the truck to a caterpillar vehicle,
d) transporting the pipes overland to the route using the caterpillar vehicle,
e) setting down the pipes at the route, and
f) mutually connecting the pipes,
**characterized in that** the steps c), d) and e) are performed by a recovery tank.

2. Method as claimed in claim 1, **characterized in that** in step c) the recovery tank lifts the pipes off the truck and places them on a transport framework.

3. Method as claimed in claim 2, **characterized in that** the pipes are placed in step c) on a transport framework arranged on the recovery tank.

4. Method as claimed in claim 2, **characterized in that** the pipes are placed in step c) on a transport framework arranged on a trailer pulled by the recovery tank.

5. Method as claimed in any of the foregoing claims, **characterized in that** for the steps c) and e) use is made of a telescopic crane arranged on the recovery tank.

6. Recovery tank, evidently intended for use in a method as claimed in any of the foregoing claims.

7. Recovery tank as claimed in claim 6, **characterized by** at least one transport framework for pipes.

8. Recovery tank as claimed in claim 7, **characterized in that** the transport framework is adapted to carry the pipes in the direction of travel.

9. Recovery tank as claimed in claim 7 or 8, **characterized by** two transport frameworks arranged on either side of the tank.

10. Recovery tank as claimed in any of the claims 6-9, **characterized by** a telescopic crane.

11. Recovery tank as claimed in claim 10, **characterized in that** the crane is mounted rotatably on the tank.

12. Recovery tank as claimed in claim 10 or 11, **characterized in that** the telescopic crane has a capacity of at least 40 tons-metre, more preferably at least 70 tons-metre and most preferably at least 100 tons-metre.

13. Recovery tank as claimed in any of the claims 6-12, **characterized by** stabilizer jacks which are preferably movable hydraulically between a retracted transport position and an extended position of use.

14. Recovery tank as claimed in any of the claims 6-12, **characterized by** means for pulling a trailer.
